# EUROPÄISCHE PATENTSCHRIFT

(11) **EP 0 386 637 B1**
(45) Veröffentlichungstag und Bekanntmachung des Hinweises auf die Patenterteilung: **27.07.1994**
(21) Anmeldenummer: 90104026.1
(22) Anmeldetag: 01.03.1990
(51) Int. Cl.: B65G 53/40, B65G 53/66

(54) **Pulverdosiergerät**
Powder-metering device
Appareil doseur pour poudre

(30) Priorität: 08.03.1989 DE 3907361
(43) Veröffentlichungstag der Anmeldung: 12.09.1990
(73) Patentinhaber: Henkel Kommanditgesellschaft auf Aktien, 40191 Düsseldorf (DE)
(72) Erfinder: Crahay, Jean-Marie, B-4820 Dison (BE)

(56) Entgegenhaltungen:
- EP-A- 0 269 250
- DE-A- 2 461 579
- US-A- 4 381 897
- US-A- 4 437 796
- US-A- 4 490 077

## Beschreibung

Die Erfindung betrifft ein Waschmittelpulver-Dosiergerät mit mindestens einem Vorratsbehälter, mindestens einer dosierten Zuführung für das Pulver von dem Vorratsbehälter zu einem Dosierbehälter, einer daran angeschlossenen Transportleitung und einer Steuereinrichtung. Die Erfindung betrifft insbesondere ein Waschmittelpulver-Dosiergerät, wie es in gewerblichen Wäschereien eingesetzt wird.

Bekannt ist, daß Waschmittelpulver mittels Wasser eingespült wird. Solche Dosiergeräte benötigen einen zusätzlichen Wasseranschluß und sind auch in anderer Hinsicht relativ kompliziert und aufwendig aufgebaut. Da das Pulver zunächst im Wasser gelöst werden muß, wird eine relativ lange Dosierzeit benötigt. Ein zusätzlicher Nachteil der bekannten Dosiergeräte ist das Auftreten von Problemen bei Pulvern mit herabgesetzter Rieselfähigkeit und erst recht mit schon auskristallisierten Pulvern. Von einem pneumatischen Eindosieren des Pulvers wurde bisher abgesehen, da die Fachwelt der Meinung war, ein solches Dosieren wäre wegen der durch Luftfeuchtigkeit zu befürchtenden Verklumpung sehr störanfällig oder sogar unmöglich.

Der Erfindung liegt die Aufgabe zugrunde, ein Pulverdosiergerät der eingangs genannten Art zu schaffen, das einfacher gebaut ist und eine erheblich geringere Dosierzeit gegenüber den bekannten Pulverdosiergeräten ermöglicht.

Diese Aufgabe wird erfindungsgemäß bei einem Pulverdosiergerät der eingangs genannten Art durch ein von der Steuereinrichtung betätigbares Ventil zwischen der Zuführung und dem Dosierbehälter und einen Anschluß des Dosierbehälters für Druckluft zum pneumatischen Fördern des Pulvers aus dem Dosierbehälter gelöst. Es hat sich nämlich überraschenderweise gezeigt, daß das Vorurteil der Fachwelt, wegen möglicher Verklumpungen des Pulvers wäre ein pneumatisches Zuführen wenig vorteilhaft, nicht zutrifft. Dieses pneumatische Zuführen hat den weiteren Vorteil, daß die Anwendung dieses Gerätes nicht auf besonders gut rieselfähige Pulver eingeschränkt ist und daß nur ein einziger Dosierbehälter für Pulver benötigt wird. Ein besonders wichtiger Vorteil des erfindungsgemäßen Gerätes liegt darin, daß sehr schnell gearbeitet werden kann, insbesondere, wenn in mehrere Anlagen dosiert werden soll. Beim erfindungsgemäßen Pulverdosiergerät wird nur etwa 1/5 der Dosierzeit als bei bekannten Pulverdosiergeräten benötigt, die mittels Wassereinspülung dosieren.

Beim erfindungsgemäßen Pulverdosiergerät können problemlos mehrere Pulverarten dadurch dosiert werden, daß mehrere Vorratsbehälter, aber nur ein Dosierbehälter vorgesehen sind. Die unterschiedlichen Pulver werden aus dem Vorratsbehälter in den Dosierbehälter gefördert, wo sie gemischt werden.

Eine besonders einfache Ausführung der dosierten Zuführung besteht aus einer Austragsschnecke, dessen Motor von der Steuereinrichtung ansteuerbar ist.

Damit automatisch festgestellt wird, wann Pulver im Vorratsbehälter nachzufüllen ist, wird vorgeschlagen, daß der oder die Vorratsbehälter Sensoren zum Detektieren einer zu geringen Füllhöhe aufweisen und daß die Sensoren mit der Steuereinrichtung verbunden sind. Bei einer zu geringen Füllhöhe geben die Sensoren ein Signal an die Steuereinrichtung, die daraufhin einen Alarm auslöst.

Das Zudosieren von wenig rieselfähigen Produkten wird dadurch erleichtert, daß mindestens ein Vorratsbehälter einen Vibrator als Austragshilfe aufweist, der von der Steuereinrichtung betätigbar ist. Dieser Vibrator kann z.B. druckluftbetrieben sein.

Um Verklumpungen des Pulvers möglichst zu vermeiden oder zumindest zu verringern, wird vorgeschlagen, daß der Innenraum des oder der Vorratsbehälter durch Abdeckungen gegen Feuchtigkeit geschützt ist.

Ferner wird als besonders vorteilhaft vorgeschlagen, daß das Ventil zwischen der Zuführung und dem Dosierbehälter ein pneumatisch betätigbarer Kugelhahn ist. So werden Störungen weitgehend vermieden.

Wenn die Maschine, in die dosiert werden soll, häufig bewegt oder gekippt wird, ist es vorteilhaft, wenn mindestens ein Teil der Transportleitung flexibel ist.

Weiterhin wird vorgeschlagen, daß mindestens ein Teil der Transportleitung transparent ist, um den Pulvertransport innerhalb der Transportleitung überwachen zu können.

Wenn mit Luftüberdruck gearbeitet wird, ist ein besonderes Sicherheitssystem vorteilhaft. Dieses Sicherheitssystem wird verwirklicht durch eine an den Dosierbehälter angeschlossene Überdruckmeßstelle, die bei Überschreiten eines bestimmten Überdrucks im Dosierbehälter ein Signal an die Steuereinrichtung gibt, die daraufhin das Ventil zwischen der Zuführung und dem Dosierbehälter verriegelt. So kann das Pulver bei Überdruck im Dosierbehälter nicht zurück in die Zuführung geblasen werden.

In einer weiteren Ausgestaltung des Sicherheitssystems wird vorgeschlagen, daß die Steuereinrichtung Alarm auslöst, wenn der Druck im Dosierbehälter über eine bestimmte Zeitdauer hinaus den bestimmten Wert überschritten hat. Falls nämlich der Druck über eine bestimmte Zeitdauer hinaus nicht abgebaut wird, liegt ein Fehler vor, auf den aufmerksam gemacht werden muß.

Ferner ist besonders vorteilhaft, wenn die Transportleitung im wesentlichen eine starre Rohrleitung ist.

Ein Ausführungsbeispiel dieser Erfindung wird nachstehend anhand von Zeichnungen näher erläutert. Es zeigen:
- Figur 1: ein schematisches Fließbild eines Pulverdosiergeräts gemäß der Erfindung und
- Figur 2: ein zeitliches Funktionsdiagramm dieses Pulverdosiergeräts.

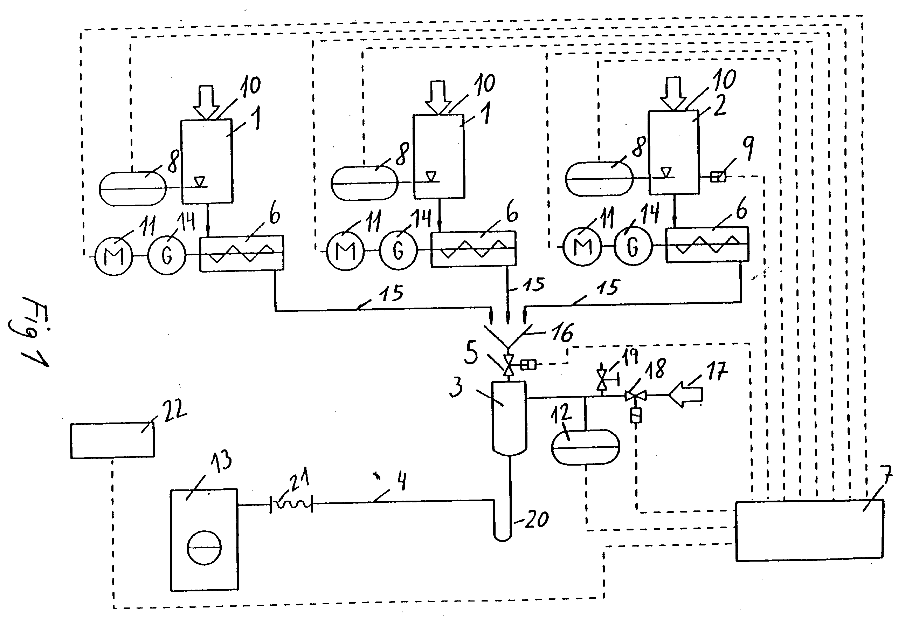

In Figur 1 sind drei Vorratsbehälter (1 und 2) mit jeweils einer Austragsschnecke (6), die das Pulver in einen Dosierbehälter (3) fördern, sowie eine Steuereinrichtung (7) und eine Waschschleudermaschine (13) dargestellt.

Jeder Vorratsbehälter (1 oder 2) hat ein Volumen von etwa 80 l und ist mit je einer Photozelle (8), die eine zu niedrige Füllhöhe detektiert, ausgerüstet. Einer der Vorratsbehälter (2) weist ferner einen druckluftbetriebenen Vibrator (9) als Austragshilfe für wenig rieselfähige Produkte auf. Die Vorratsbehälter (1,2) sind mit einer oberen Abdeckung (10) als Feuchtigkeitsschutz für das Pulver versehen. An jeden Vorratsbehälter (1,2) ist eine aus Stahl bestehende Austragsschnecke (6) mit einem Kunststoffrohr angeschlossen, die über ein Getriebe (14) von einem Motor (11) angetrieben wird, wie es in Figur 1 dargestellt ist. Die Austragsschnecken (6) fördern das Pulver über jeweils ein Kunststoffrohr (15) in einen Einfülltrichter (16) der Dosierkammer. Aus dem Einfülltrichter (16) fällt das Pulver bei geöffnetem Kugelhahn (5) in einen Dosierbehälter (3). Der Kugelhahn (5) ist zwischen Einfülltrichter (16) und Dosierbehälter (3) angeordnet und wird pneumatisch von der Steuereinrichtung (7) betätigt. An den Dosierbehälter (3) ist eine Druckluftquelle von 6 bar, dargestellt durch den Pfeil (17), über ein ebenfalls von der Steuereinrichtung (7) betätigbares Ventil (18) angeschlossen. Am Druckluftanschluß des Dosierbehälters (3) ist außerdem ein Druckentlastungsventil (19), und zwar zwischen Ventil (18) und dem Dosierbehälter (3) angeordnet. Das Druckentlastungsventil (19) wird manuell betätigt. Am Druckluftanschluß des Dosierbehälters (3) ist ferner direkt am Dosierbehälter (3) eine Überdruckmeßstelle (12) vorgesehen. Diese Meßstelle (12) gibt ihr Signal an die Steuereinrichtung (7).

Der aus Kunststoff bestehende Dosierbehälter (3) ist über einen 180°-Krümmer (20) an die Transportleitung (4) angeschlossen. In der Transportleitung (4) ist ein flexibles, durchsichtiges Schlauchstück (21) als Ausgleich beim Kippvorgang der Waschtrommel sowie beim Überwachen des Pulvertransportes eingesetzt. Die Transportleitung (4) ist an die Waschschleudermaschine (13) angeschlossen, deren Steuerung mit (22) in Figur 1 bezeichnet ist. Die Steuereinrichtung (7) empfängt Signale von der Steuerung (22) der Waschschleudermaschine (13), von der Überdruckmeßstelle (12) und von den Photozellen (8). Die Steuereinrichtung (7) steuert die drei Motoren (11) der Austragsschnecken (6), den Vibrator (9) am Vorratsbehälter (2), den Kugelhahn (5) und das Druckluftventil (18). Bei der Steuerung handelt es sich um eine Zeit/Mengendosierung der Pulver. Ein manueller Eingriff ist nicht notwendig.

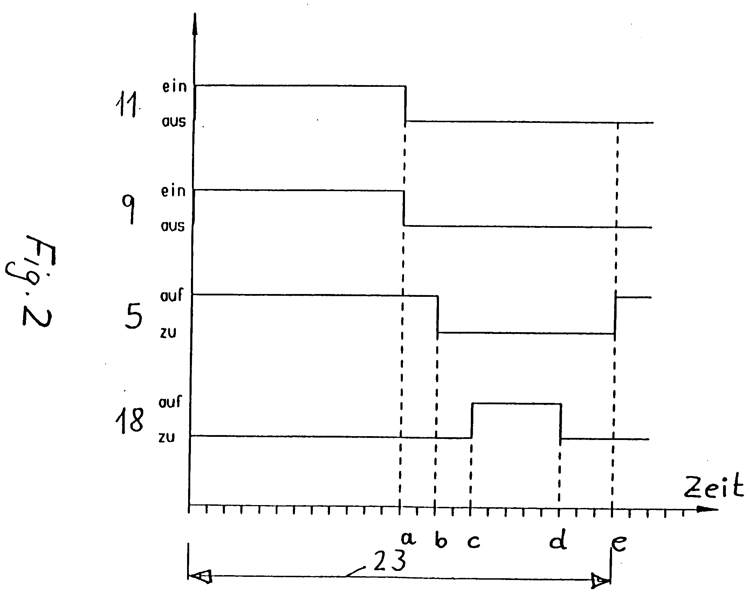

Die Arbeitsweise des Pulverdosiergeräts wird nachstehend anhand von Figur 2 näher erläutert. In Figur 2 ist durch den Doppelpfeil (23) die gesamte, für einen Dosiervorgang benötigte Zeit dargestellt. Die Bezugszahlen (11, 9, 5 und 18) verweisen auf die entsprechenden Elemente in Figur 1 und verdeutlichen, welche Funktion in diesem Funktionsdiagramm in Abhängigkeit von der Zeit jeweils dargestellt ist. Zunächst werden die Vorratsbehälter (1,2) mit den jeweiligen Pulvern gefüllt. Mit den Austragsschnecken (6) wird eine definierte Menge Waschpulver aus den Behältern (1,2) über den Einfülltrichter (16) in den Dosierbehälter (3) gefördert. Die Motoren (11) und der Vibrator (9) sind also eingeschaltet, der pneumatisch betätigte Kugelhahn (5) ist offen, aber das Druckluftventil (18) geschlossen. Danach werden die Motoren (11) und der Vibrator (9) abgeschaltet. Dies findet zwischen den Zeitpunkten a) und b) statt. Am Zeitpunkt b) schließt der Kugelhahn (5) den Dosierbehälter (3) nach oben hin ab. Das Pulver liegt auf dem Boden des Dosierbehälters (3) bzw. im daran anschließenden 180°-Krümmer der Transportleitung (5). Im Zeitpunkt c) wird nun der Dosierbehälter (3) knapp unterhalb des Kugelhahns (5) mit Druckluft beaufschlagt, indem das Ventil (18) geöffnet wird. Die Druckluft entspannt sich in die Transportleitung (4) hinein und drückt die Waschpulvermenge in den Einspülkasten der Waschschleudermaschine (13). Vor dem Zeitpunkt d) an dem das Druckluftventil (18) geschlossen wird, ist der Einfüllvorgang beendet. Nach einer geringen Wartezeit wird im Zeitpunkt e) der Kugelhahn (5) wieder geöffnet. Das Pulverdosiergerät steht nun für einen weiteren Dosiervorgang zur Verfügung. Der gesamte Dosiervorgang bei dieser Ausgestaltung der Erfindung dauerte nur etwa 24 Sekunden. Diese Zeit ist durch den Doppelpfeil (23) dargestellt. Obwohl etwa 5 Sekunden lang Druckluft in den Dosierbehälter (3) eingeleitet wird, ist schon nach etwa 2 Sekunden das Pulver in die Waschschleudermaschine transportiert worden. Damit verbleiben etwa 3 Sekunden als Spülzeit. Die zum Pulvertransport nötige Druckluft wird in die Entlüftung der Waschschleudermaschine geleitet.

Das Pulverdosiergerät gemäß der Erfindung hat sich in der Praxis bewährt. Es sind auch nicht, wie erwartet werden könnte, Probleme mit verstopften Rohren aufgetreten.

Die Sicherheits- und Alarmeinrichtungen des erfindungsgemäßen Pulverdosierungsgeräts arbeiten folgendermaßen. Bei Waschpulvermangel im Vorratsbehälter (1 oder 2) wird ein Alarm durch die Photozellen (8) ausgelöst. In diesem Fall ist Waschpulver von Hand in den Vorratsbehälter nachzufüllen. Anschließend wird der Alarm gelöscht.

Bei einem Überdruck im Dosierbehälter (3) oder in der Transportleitung (4) schließt der Kugelhahn (5) den Dosierbehälter (3) mit einer Zeitverzögerung von 2 Sekunden, nachdem die Schneckenmotoren (11) ausgeschaltet sind. Nach weiteren 2 Sekunden bei geschlossenem Kugelhahn (5) tritt Druckluft durch das Ventil (18) in den Dosierbehälter (3) ein. Falls mehr als 0,2 bar Überdruck im Behälter gemessen werden, läßt sich der Kugelhahn (5) nicht mehr öffnen. Der Überdruck wird durch die Meßstelle (12) detektiert, wodurch die Steuereinrichtung (7) den Kugelhahn (5) sperrt. Steht dieser Überdruck länger als 8 Sekunden nach Öffnen der Druckluft noch an, so wird ein Alarm ausgelöst. Der Dosierbehälter (3) bleibt weiterhin geschlossen, und der Druck kann nur manuell über das Druckentlastungsventil (19) abgebaut werden. Erst nach Abbau des Druckes öffnet sich der Kugelhahn (5) wieder, und es kann die Störursache ermittelt werden.

Mit dem erfindungsgemäßen Pulverdosiergerät läßt sich eine Dosiergenauigkeit von 2 bis 3 % erreichen. Diese Werte sind reproduzierbar.

## Patentansprüche

1. Waschmittelpulver-Dosiergerät mit mindestens einem Vorratsbehälter (1,2), mindestens einer dosierten Zuführung für das Pulver von dem Vorratsbehälter zu einem Dosierbehälter (3), einer daran angeschlossenen Transportleitung (4) und einer Steuereinrichtung (7), gekennzeichnet durch ein von der Steuereinrichtung (7) betätigbares Ventil (5) zwischen der Zuführung und dem Dosierbehälter (3) und einen Anschluß des Dosierbehälters (3) für Druckluft zum pneumatischen Fördern des Pulvers aus dem Dosierbehälter (3).

2. Pulverdosiergerät nach Anspruch 1, dadurch gekennzeichnet, daß mehrere Vorratsbehälter (1,2), aber nur ein Dosierbehälter (3) vorgesehen sind.

3. Pulverdosiergerät nach Anspruch 1 oder 2, dadurch gekennzeichnet, daß die dosierte Zuführung aus einer Austragsschnecke (6) besteht, dessen Motor (11) von der Steuereinrichtung (7) ansteuerbar ist.

4. Pulverdosiergerät nach einem der Ansprüche 1 bis 3, dadurch gekennzeichnet, daß der oder die Vorratsbehälter (1,2) Sensoren (8) zum Detektieren einer zu geringen Füllhöhe aufweisen und daß die Sensoren (8) mit der Steuereinrichtung (7) verbunden sind.

5. Pulverdosiergerät nach einem der Ansprüche 1 bis 4, dadurch gekennzeichnet, daß mindestens ein Vorratsbehälter (2) einen Vibrator (9) als Austragshilfe aufweist, der von der Steuereinrichtung (7) betätigbar ist.

6. Pulverdosiergerät nach einem der Ansprüche 1 bis 5, dadurch gekennzeichnet, daß der Innenraum des oder der Vorratsbehälter (1,2) durch Abdeckungen (10) gegen Feuchtigkeit geschützt ist.

7. Pulverdosiergerät nach einem der Ansprüche 1 bis 6, dadurch gekennzeichnet, daß das Ventil (5) zwischen der Zuführung und dem Dosierbehälter (3) ein pneumatisch betätigbarer Kugelhahn ist.

8. Pulverdosiergerät nach einem der Ansprüche 1 bis 7, dadurch gekennzeichnet, daß mindestens ein Teil der Transportleitung (4) flexibel ist.

9. Pulverdosiergerät nach einem der Ansprüche 1 bis 8, dadurch gekennzeichnet, daß mindestens ein Teil der Transportleitung (4) transparent ist.

10. Pulverdosiergerät nach einem der Ansprüche 1 bis 9, gekennzeichnet durch eine an den Dosierbehälter (3) angeschlossene Überdruck-Meßstelle (12), die bei Überschreiten eines bestimmten Überdrucks im Dosierbehälter (3) ein Signal an die Steuereinrichtung (7) gibt, die daraufhin das Ventil (5) zwischen der Zuführung und dem Dosierbehälter (3) verriegelt.

11. Pulverdosiergerät nach Anspruch 10, dadurch gekennzeichnet, daß die Steuereinrichtung (7) Alarm auslöst, wenn der Druck im Dosierbehälter (3) über eine bestimmte Zeitdauer hinaus den bestimmten Wert überschritten hat.

12. Pulverdosiergerät nach einem der Ansprüche 1 bis 11, dadurch gekennzeichnet, daß die Transportleitung (4) im wesentlichen eine starre Rohrleitung ist.

## Claims

1. Washing-powder-metering device with at least one stock container (1, 2), at least one metered feed for the powder from the stock container to a metering container (3), a transport duct (4) connected thereto and a control equipment (7), characterised by a valve (5), which is actuable by the control equipment (7) and between the feed and the metering container (3), and a connection of the metering container (3) for compressed air for the pneumatic conveying of the powder out of the metering container (3).

2. Powder-metering device according to claim 1, characterised thereby, that several stock containers (1, 2) are provided, but only one metering container (3).

3. Powder-metering device according to claim 1 or 2, characterised thereby, that the metered feed consists of a discharge worm (6), the motor (11) of which is controllable by the control equipment (7).

4. Powder-metering device according to one of the claims 1 to 3, characterised thereby, that the or each stock container (1, 2) displays sensors (8) for the detection of too low a filling height and that the sensors (8) are connected with the control equipment (7).

5. Powder-metering device according to one of the claims 1 to 4, characterised thereby, that at least one stock container (2) displays a vibrator (9), which is actuable by the control equipment (7), as discharge aid.

6. Powder-metering device according to one of the claims 1 to 5, characterised thereby, that the interior space of the or each stock container (1, 2) is protected against moisture by covers (10).

7. Powder-metering device according to one of the claims 1 to 6, characterised thereby, that the valve (5) between the feed and the metering container (3) is a pneumatically actuable ball cock.

8. Powder-metering device according to one of the claims 1 to 7, characterised thereby, that at least a part of the transport duct (4) is flexible.

9. Powder-metering device according to one of the claims 1 to 8, characterised thereby, that at least a part of the transport duct (4) is transparent.

10. Powder-metering device according to one of the claims 1 to 9, characterised thereby, that an excess-pressure-measuring point (12), which is connected to the metering container (3) and which on a certain excess pressure being exceeded in the metering container (3) delivers a signal to the control equipment (7), which thereupon latches the valve (5) between the feed and the metering container (3).

11. Powder-metering device according to claim 10, characterised thereby, that the control equipment (7) triggers an alarm when the pressure in the metering container (3) has exceeded the predetermined pressure beyond a predetermined time span.

12. Powder-metering device according to one of the claims 1 to 11, characterised thereby, that the transport duct (4) is substantially a rigid pipe duct.

## Revendications

1. Appareil doseur pour produits de lavage en poudre, pourvu d'au moins un réservoir de stockage (1,2), d'au moins une alimentation dosée pour la poudre menant du réservoir de stockage à un réservoir de dosage (3), d'une conduite de transport (4) reliée à ce dernier et d'un dispositif de commande (7), lequel appareil est caractérisé par le fait qu'il est pourvu d'une vanne (5), pouvant être actionnée par le dispositif de commande (7), située entre l'alimentation et le réservoir de dosage (3), ce dernier (3) étant pourvu d'un raccord pour de l'air comprimé servant au transport pneumatique de la poudre hors du réservoir de dosage (3).

2. Appareil doseur pour poudre selon la revendication 1, caractérisé par le fait qu'il est pourvu de plusieurs réservoirs de stockage (1, 2), mais d'un seul réservoir de dosage (3).

3. Appareil doseur pour poudre selon l'une ou l'autre des revendications 1 ou 2, caractérisé par le fait que l'alimentation dosée est constituée par une vis de distribution (6) dont le moteur (11) peut être commandé par le dispositif de commande (7).

4. Appareil doseur pour poudre selon l'une quelconque des revendications 1 à 3, caractérisé par le fait que le ou les réservoir(s) de stockage (1, 2) es/sont pourvu(s) de détecteurs (8) adaptés pour détecter un niveau de remplissage trop bas et qui (8) sont reliés au dispositif de commande (7).

5. Appareil doseur pour poudre selon l'une quelconque des revendications 1 à 4, caractérisé par le fait qu'un réservoir de stockage (2) au moins est pourvu d'un vibrateur (9) servant d'aide au déchargement et pouvant être actionné par le dispositif de commande (7).

6. Appareil doseur pour poudre selon l'une quelconque des revendications 1 à 5, caractérisé par le fait que l'intérieur du ou des réservoir(s) de stockage (1, 2) est protégé de l'humidité par des couvercles (10).

7. Appareil doseur pour poudre selon l'une quelconque des revendications 1 à 6, caractérisé par le fait que la vanne (5) située entre l'alimentation et le réservoir de dosage (3) est constituée par un robinet à boisseau sphérique à commande pneumatique.

8. Appareil doseur pour poudre selon l'une quelconque des revendications 1 à 7, caractérisé par le fait qu'au moins une partie de la conduite de transport (4) est flexible.

9. Appareil doseur pour poudre selon l'une quelconque des revendications 1 à 8, caractérisé par le fait qu'au moins une partie de la conduite de transport (4) est transparente.

10. Appareil doseur pour poudre selon l'une quelconque des revendications 1 à 9, caractérisé par le fait qu'il est pourvu d'une cellule de mesure de la surpression (12) raccordée au réservoir de dosage (3) et qui, en cas de dépassement d'une surpression déterminée dans celui-ci (3), envoie un signal au dispositif de commande (7), lequel, suite à ce signal, bloque la vanne (5) située entre l'alimentation et le réservoir de dosage (3).

11. Appareil doseur pour poudre selon la revendication 10, caractérisé par le fait que le dispositif de commande (7) déclenche une alarme lorsque la pression dans le réservoir de dosage (3) a dépassé, pendant un temps supérieur à une durée déterminée, la valeur déterminée.

12. Appareil doseur pour poudre selon l'une quelconque des revendications 1 à 11, caractérisé par le fait que la conduite de transport (4) est constituée essentiellement par une conduite rigide.
